# EUROPÄISCHE PATENTANMELDUNG

(11) **EP 1 316 704 A2**
(43) Veröffentlichungstag der Anmeldung: **04.06.2003**
(21) Anmeldenummer: 02022010.9
(22) Anmeldetag: 01.10.2002
(51) Int. Cl.: F02D 35/02, F02D 41/40, F02D 41/14

(54) **Verfahren und Vorrichtung zur Steuerung einer Brennkraftmaschine**

(30) Priorität: 01.12.2001 DE 10159017
(71) Anmelder: ROBERT BOSCH GMBH, 70442 Stuttgart (DE)
(72) Erfinder: Buck, Rainer, 71732 Tamm (DE); Damitz, Jens, 75428 Illingen (DE); Samuelsen, Dirk, 71636 Ludwigsburg (DE); Fehrmann, Ruediger, 71229 Leonberg (DE); Schueler, Matthias, 71638 Ludwigsburg (DE)

(57) **Zusammenfassung**

Es werden ein Verfahren und eine Vorrichtung zur Steuerung einer Brennkraftmaschine beschrieben. Wenigstens ein Sensor dient zur Erfassung einer ersten Größe, die den Druck im Brennraum wenigstens eines Zylinders charakterisiert. Ausgehend von dieser ersten Größe wird eine zweite Größe ermittelt, die den Maximalwert der Änderung und oder die Lage des Maximalwertes der Änderung charakterisiert. Diese zweite Größe dient zur Steuerung und/oder Regelung von Betriebskenngrößen der Brennkraftmaschine.

## Beschreibung

### Stand der Technik

Die Erfindung betrifft ein Verfahren und eine Vorrichtung zur Steuerung einer Brennkraftmaschine gemäß den Oberbegriffen der unabhängigen Ansprüche.

Aus der DE 197 49 814 ist ein Verfahren und eine Vorrichtung zur Steuerung einer Brennkraftmaschine bekannt, bei der mit einem Sensor eine erste Größe erfasst wird, die den Druck im Brennraum wenigstens eines Zylinders charakterisiert.

Desweiteren sind Einrichtungen bekannt, mit denen die Zylinderdrücke von Brennkraftmaschinen über der Zeit bzw. über Kurbelwinkel gemessen und einer Motorsteuerung zur Verfügung gestellt werden. Weiter sind Verfahren bekannt, mit denen aus einem hochaufgelösten Drucksignal während des Betriebes Kenngrößen ermittelt werden, die dann wiederum zur zylinderindividuellen Optimierung des Motorprozesses im Hinblick auf die Zielgrößen Verbrauch, Emissionen und Komfort benutzt werden.

Üblicherweise spricht man bei diesen Anwendungen von zylinderdruckbasierten Motorsteuerungen. Typische Funktionen sind die Spitzendruck-, Klopf-, Verbrennungsschwerpunktlage , Brennbeginnregelung sowie die Aussetzererkennung.

Hierzu werden meist als Kenngrößen die Absolutwerte oder Relationen von diesen zu bestimmten Zeitpunkten/Winkellagen, Differenzdrücke zum Kompressionsverlauf, Druck und Druckdifferenzintegrale, indizierte Arbeit oder indiziertes Moment, oder in einem Winkelfenster integrierte, bandpassgefilterte Druckverläufe benützt.

Erfindungsgemäß ist vorgesehen, dass bei einem Verfahren zur Steuerung einer Brennkraftmaschine, mit wenigstens einem Sensor eine erste Größe erfasst wird, die den Druck im Brennraum wenigstens eines Zylinders charakterisiert. Ausgehend von dieser ersten Größe wird eine zweite Größe ermittelt wird, wobei die zweite Größe die Änderung der ersten Größe und/oder den Verlauf der Verbrennung charakterisiert. Die Steuerung und/oder die Regelung von Betriebskenngrößen der Brennkraftmaschine erfolgt abhängig von dieser zweiten Größe.

Bei der ersten Größe, die mittels eines Sensors erfaßt wird, handelt es sich vorzugsweise um den Druck in einem oder mehreren der Brennräume. Bei der zweiten Größe handelt sich vorzugsweise um eine aus der ersten Größe abgeleitetet Größe. Besonders vorteilhaft ist es, wenn die zweite Größe den Maximalwert der ersten Größe und/oder den Maximalwert der Änderung der ersten Größe und/oder die Lage der Maximalwerte der ersten Größe charakterisiert. Ferner ist vorteilhaft, wenn die zweite Größe ein Heizverlauf, ein Brennverlauf, ein Summenheizverlauf, ein Summenbrennverlauf, ein Maximalwert und/oder ein Maximalwert der Änderung, eine Lage der Maximalwerte des Heizverlaufs, des Brennverlaufs, des Summenheizverlaufs und/oder des Summenbrennverlaufs charakterisiert.

Besonders vorteilhaft ist es, wenn der Gradient der ersten Größe als zweite Größe verwendet wird, das heißt dass die zweite Größe ausgehend von der Ableitung der ersten Größe vorgebbar ist.

Ein erheblicher Gewinn an Sicherheit ergibt sich, wenn abhängig von dem Vergleich der zweiten Größe mit einem Schwellenwert eine Stellgröße vorgebbar ist. Dadurch kann verhindert werden dass der Brennraumdruck zu stark ansteigt, das heißt es werden Situationen Vermieden, die zu einer Beschädigung der Brennkraftmaschine führen können.

Besonders vorteilhaft ist es, wenn abhängig von der zweiten Größe der Ladedruck, der Raildruck, eine Luftgröße, die die der Brennkraftmaschine zugeführte Luftmenge charakterisiert, die Dauer und/oder der Beginn wenigstens einer Voreinspritzung, wenigstens einer Haupteinspritzung und/oder wenigstens einer Nacheinspritzung gesteuert und/oder geregelt wird.

Dadurch, dass eine Größe ermittelt wird, die den Verlauf der Verbrennung charakterisiert, diese Größe mit einem Sollwert verglichen wird, und ausgehend von dem Vergleich mit dem Sollwert die Dauer und/oder der Beginn wenigstens einer Voreinspritzung vorgebbar ist, ist eine sehr genaue Korrektur der Voreinspritzung während des Betriebs der Brennkraftmaschine möglich.

Neben der Verwendung eines Brennraumdrucksensors ist die Verwendung eines Signals eines Körperschallsensors und/oder eines Ionenstromsensors oder eines aus diesen Signalen abgeleitete Größe zur Regelung der Größe, die den Verlauf der Verbrennung charakterisiert vorteilhaft.

### Zeichnung

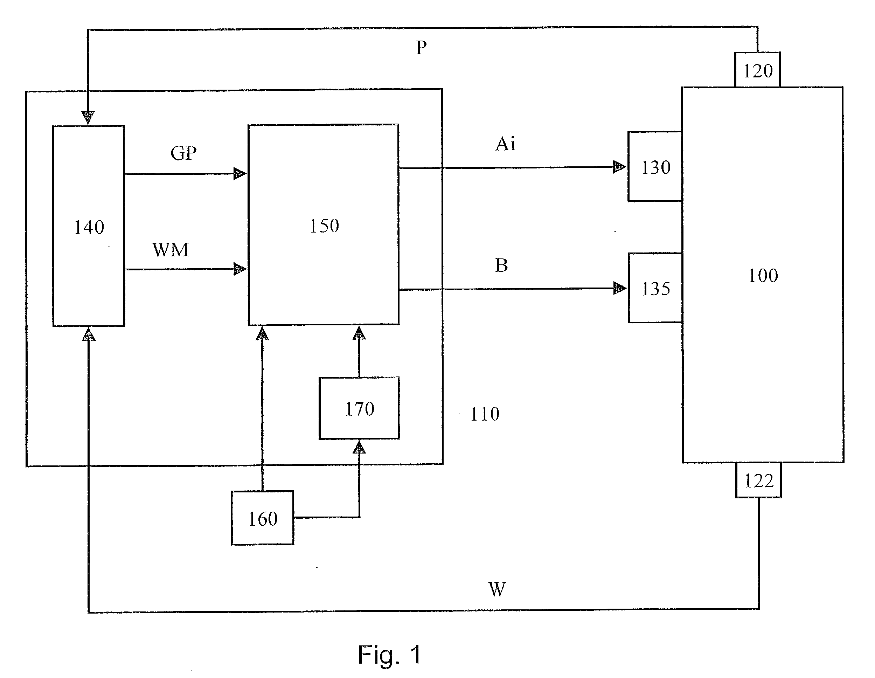

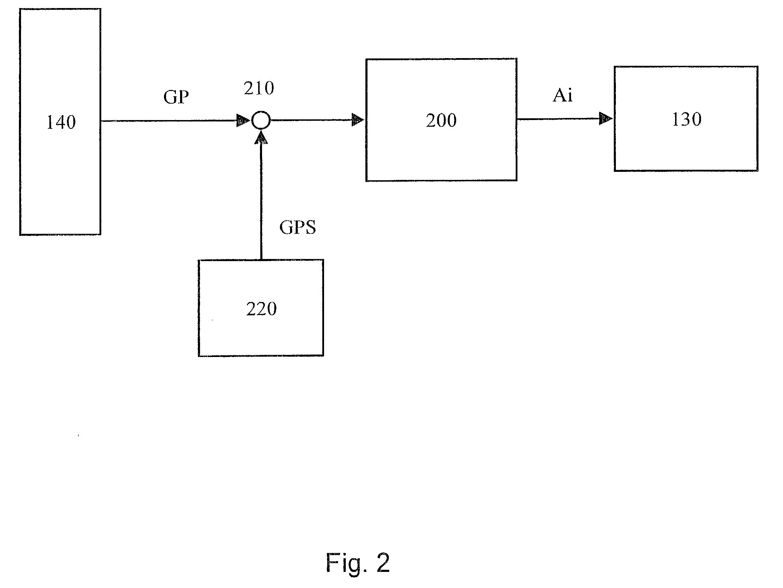

Die Erfindung wird nachstehend anhand der in der Zeichnung dargestellten Ausführungsbeispiele erläutert.
Es zeigen die Figur 1 ein Blockschaltbild einer Einrichtung zur Durchführung des erfindungsgemäßen Verfahrens und die Figur 2 eine Reglerstruktur.

### Beschreibung des Ausführungsbeispieles

In Figur 1 ist die erfindungsgemäße Vorgehensweise anhand eines Blockdiagrammes dargestellt. Eine Brennkraftmaschine ist mit 100 bezeichnet. An der Brennkraftmaschine ist zum einen wenigstens ein Drucksensor 120 und ein Winkelsensor 122 angeordnet. Der Drucksensor 120 liefert ein Signal P, das den Druck in wenigstens einem Brennraum der Brennkraftmaschine charakterisiert. Bei einer ersten Ausgestaltung ist lediglich ein Drucksensor vorgesehen, der an einem repräsentierenden Zylinder angeordnet ist und den Druck in diesem Zylinder charakterisiert. Bei einer zweiten Ausgestaltung ist bei jedem Zylinder der Brennkraftmaschine ein Drucksensor angeordnet, der jeweils ein den Druck im Brennraum des jeweiligen Zylinders charakterisierendes Signal abgibt.

Der Winkelsensor 122 ist vorzugsweise an der Kurbelwelle der Brennkraftmaschine angeordnet und liefert ein hochauflösendes Winkelsignal W bezüglich der Winkelstellung der Kurbelwelle. Alternativ kann der Winkelsensor auch an der Nockenwelle der Brennkraftmaschine angeordnet sein.

Desweiteren sind an der Brennkraftmaschine ein erster Steller 130 und ein zweiter Steller 135 angeordnet. Die Steller und die Sensoren stehen mit einer Steuereinheit 110 in Verbindung.

Das Signal P des Drucksensors 120 und das Signal W des Winkelsensors 122 gelangen zu einer Auswerteeinheit 140, die vorzugsweise eine Teileinheit der Steuereinheit 110 bildet. Die Auswerteeinheit 140 liefert Signale GP und WM an eine Funktionseinheit 150. Die Funktionseinheit wiederum beaufschlagt den ersten Steller 130 mit einer ersten Stellgröße Ai und den zweiten Steller 135 mit einer zweiten Stellgröße B. Bei der ersten Stellgröße Ai handelt es sich vorzugsweise um eine zylinderindividuelle Stellgröße, die für jeden Zylinder individuell vorgebbar ist. Bei der zweiten Stellgröße handelt es sich um eine motorglobale Stellgröße zur Ansteuerung des Stellers 135, der eine globale Größe steuert.

Bei den ersten Stellgrößen Ai handelt es sich vorzugsweise um die Ansteuerdauern und/oder die Ansteuerbeginne einer Einspritzung. Vorzugsweise ist vorgesehen, dass ein Einspritzvorgang des Arbeitszyklusses in mehrere Teileinspritzungen aufgeteilt ist. Dabei handelt es sich bei der Stellgröße Ai um die Ansteuerdauer und/oder den Ansteuerbeginn wenigstens einer der Teileinspritzungen. Als Teileinspritzungen sind üblicherweise wenigstens eine Haupteinspritzung, wenigstens eine Voreinspritzung und wenigstens eine Nacheinspritzung vorgesehen. Insbesondere bei der Haupteinspritzung und der Voreinspritzung ist die erfindungsgemäße Vorgehensweise vorteilhaft. Zusätzlich oder alternativ zu der Ansteuerdauer und/oder dem Ansteuerbeginn kann auch der Einspritzratenverlauf der Teileinspritzungen vorgegeben werden. Hierbei handelt es sich um den Verlauf der Einspritzmenge über Zeit bzw. Winkeleinheit.

Als motorglobale Stellgrößen werden insbesondere der Ladedruck und/oder die der Brennkraftmaschine zugeführte Luftmenge beeinflussende Stellgrößen wie bspw. die Abgasrückführrate und/oder der Einspritz- und/oder der Raildruck verwendet.

Desweiteren werden der Funktionseinheit 150 die Ausgangssignale einer weiteren Funktionseinheit 170 zugeführt, die ebenso wie die Funktionseinheit 150 die Ausgangssignale weiterer Sensoren 160 verarbeitet, die auch im Bereich der Brennkraftmaschine angeordnet sein können. Bei der weiteren Funktionseinheit 170 kann es sich bspw. um eine Steuereinheit zur Steuerung der Abgasrückführung oder einer der oben genannten globalen Stellgrößen handeln.

Vorzugsweise werden die Zylinderdruckverläufe aller Zylinder Pi einzeln durch Brennraumdrucksensoren erfasst. Eine Alternative besteht darin, dass nur ein als repräsentativ behandelter Zylinder mit einer Druckerfassung versehen ist. In beiden Fällen wird ein hochaufgelöstes Winkelsignal W als Bezugsgröße verwendet, um zum einen die Winkellage, zum anderen den Gradienten berechnen zu können. Zur Berechnung eines Gradienten allein kann alternativ auch die Zeit benutzt werden.

Die Sensorsignale Druck P und der Winkel W werden der Auswerteeinheit 140, die typischerweise ein Bestandteil der Motorsteuerung ist, zugeführt. Ihre Aufgabe ist die Bildung von Merkmalsgrößen GP, die vorzugsweise als Istgröße einer Regelung zugeführt werden und/oder die durch Vergleich mit einem und/oder mehreren Schwellenwerten auf zulässige Werte begrenzt werden.

Bevorzugt werden eine und/oder mehrere der folgenden Größen ermittelt. Dies sind das absolute Maximum des Druckgradienten, die Winkellage des maximalen Druckgradienten. Besonders vorteilhaft ist, wenn zusätzlich noch relative Maxima des Druckgradienten und/oder deren entsprechende Winkellagen ermittelt werden.

Bevorzugt erfolgt die Bestimmung des absoluten Maximums innerhalb unterschiedlicher Winkelbereiche. Damit kann beispielsweise eine gezielte Zuordnung zu unterschiedlichen Teileinspritzungen erfolgen.

Die Steuereinheit 110 beinhaltet die Funktionseinheit 150, die die Regelung des Druckgradienten durchführt. In einer einfachen Ausführungsform besteht die Funktion der Funktionseinheit darin, das bei Überschreitungen zulässiger Grenzwerte ein Eintrag in einem Fehlerspeicher erfolgt bzw. dass ein gesteuerter Eingriff derart erfolgt, dass sich der Zylinderdruckgradient verringert.

Die Koordinierung der Stellgrößen entsprechend einer geeigneten Eingriffstrategie erfolgt unter Beachtung weiterer Eingangsgrößen, die entweder von Sensoren oder aus anderen Funktionen der Motorsteuerung stammen. Auch bekannte Zylinderdruck basierte Merkmale wie z.B. Druckdifferenzen zum Kompressionsverlauf oder Mitteldruckbeiträge aus verschiedenen Verbrennungsphasen als Maß für Einzeleinspritzmengen können herangezogen werden, um die Einzelwirkungen der Einspritzungen zu erfassen. Insofern baut die beschriebene Erfindung auf bekannten Zylinderdruck basierten Motorsteuerungen auf.

Zur Beurteilung der möglichen Gefährdung von Elementen der Brennkraftmaschine, wie beispielsweise der Kolbenringdichtung, kann ferner vorgesehen sein, dass der absolute Betrag des Zylinderdruckes in die Bewertung einbezogen wird.

Übliche zylinderdruckbasierte Regelungen betrachten das nach der Zeit bzw. dem Kurbelwinkel differenzierte Zylinderdrucksignal nicht oder nur zur Brennbeginnerkennung. Das nach der Zeit und/oder nach dem Kurbelwinkel differenzierte Zylinderdrucksignal beinhaltet direkt und indirekt zusätzliche Informationen über die Art der Energieumsetzung und deren Wirkung auf das motorische Verhalten, z.B. bezüglich Verbrennungsgeräusch oder Belastung der Kolbenringe.

Erfindungsgemäß werden die Art der Energieumsetzung und deren Wirkung auf das motorische Verhalten in Abhängigkeit von Einspritzcharakteristika wie Menge und Ansteuerbeginn der verschiedenen Teileinspritzungen und/ oder des Einspritzratenverlaufs über die Steuereinheit 110 und somit ihre Einhaltung in einem geschlossenen Regelkreis realisiert. Damit wird die Optimierung der Brennkraftmaschine im Betrieb auf weitere Zielgrößen ausgedehnt.

Erfindungsgemäß erfolgt eine Auswertung des Drucksignals bezüglich der Merkmalsgröße Druckgradient GP, wobei dieser vorzugsweise durch Differentiation über den Winkel W gemäß der Formel dP/dW bzw. durch Differentiation über die Zeit t gemäß der Formel dP/dt erfolgt. Insbesondere wird ein absoluter maximaler oder mehrere relative maximale Druckgradienten und seine/ ihre Lage(n) bestimmt.

Übersteigt der Druckgradient vorgegebene kritische Grenzwerte oder erreicht der Druckgradient vorgegebene Sollwerte nicht, erfolgt über Stelleingriffe der Motorsteuerung eine Korrektur. Diese Korrektur ist als Steuerung und bei einer bevorzugten Ausführungsform, wie sie in Figur 2 dargestellt ist, als Regelung ausgebildet. Eine Steuerung ist vorzugsweise vorgesehen, wenn ein Stelleingriff lediglich bei einer Grenzwertüberwachung erfolgt.

Der maximal vorkommende Druckanstieg in einem Zylinder beeinflusst maßgeblich das Verbrennungsgeräusch und damit auch die Gesamtgeräuschemission der Brennkraftmaschine. Die Applikation der Sollwerte in einer herkömmlichen Motorsteuerung kann zwar indirekt auch der Einhaltung bestimmter Grenzwerte der Zielgröße Verbrennungsgeräusch Rechnung tragen. Eine einzelne Brennkraftmaschine inklusive seiner Einspritzeinrichtung weicht jedoch aufgrund verschiedener Effekte von den somit nur indirekt vorgegebenen Sollgrößen des maximalen Druckgradienten ab. Diese Effekte sind insbesondere: die Gesamtheit aller Toleranzen, Verschleiß- und Alterungserscheinungen, in den Sollwerten nicht oder nicht hinreichend berücksichtigte Betriebsbedingungen.

Desweiteren können sich an einer Brennkraftmaschine die Druckverläufe von Zylinder zu Zylinder aufgrund von Toleranzen, Verschleiß oder konstruktiv bedingten ungleichen Betriebsbedingungen, wie z.B. der Zuführung rückgeführten Abgases oder der Ausprägung einer die Gemischaufbereitung beeinflussenden Drallströmung, unterscheiden. Eine herkömmliche Applikation muss deshalb diesen Gesamtstreubreiten in Form von Sicherheitszuschlägen Rechnung tragen.

Durch Erfassung des/ der maximalen Druckgradienten und seiner/ ihrer Lage kann in Form einer Regelung das Einhalten eines definierten Verbrennungsgeräuschniveaus auch bei Auftreten der genannten Abweichungen gewährleistet werden.

Eine solche Regelung ist beispielhaft in Figur 2 dargestellt. Bereits in Figur 1 beschriebene Elemente sind mit entsprechenden Bezugszeichen bezeichnet. Die Auswerteeinheit 140 stellt einem Verknüpfungspunkt einen Istwert GP zur Verfügung. Am zweiten Eingang des Verknüpfungspunktes 210 liegt ein Sollwert GPS an, der von einer Sollwertvorgabe 220 bereitgestellt wird. Mit dem Ausgangssignal des Verknüpfungspunkt 210 wird ein Regler 200 beaufschlagt, der wiederum den ersten und/oder den zweiten Steller 130 mit Ansteuersignalen Ai beaufschlagt.

Bei einer bevorzugten Ausführungsform gibt die Sollwertvorgabe 220 abhängig vom Betriebspunkt einen zulässigen Druckgradienten vor. Ausgehend von der Abweichung zwischen dem Sollwert GPS und dem tatsächlichen Druckgradienten GP gibt der Regler 220 ein Signal zur Ansteuerung der Injektoren an. Bevorzugt gibt der Regler 200 eine Voreinspritzmenge vor. Vorzugsweise wird die, den Druckanstieg maßgeblich beeinflussende, Voreinspritzmenge derart vorgegeben, dass der Druckgradient einen bestimmten Wert nicht übersteigt. Dieser Wert ist so gewählt, dass die Geräuschemissionen den Komfort nicht beeinträchtigen bzw. gesetzlich vorgegebene Grenzwerte einhalten.

Erfindungsgemäß ist vorgesehen, dass der Verlauf der Voreinspritzung auf einen bestimmten Sollwert geregelt wird.

Das heißt die Dauer der Voreinspritzung wird so lange verlängert bzw. verkürzt, bis der Verlauf der Voreinspritzung einen erwarteten Verlauf aufweist. Dabei werden nicht der Verlauf der Voreinspritzung direkt, sondern eine Ersatzgröße, die in guter Korrelation zu dem Verlauf steht auf den Sollwert eingeregelt. Dabei wird die Ersatzgröße derart gewählt, dass die Geräuschemissionen und die Abgasemissionen minimiert sind. Durch diese Vorgehensweise können Fehler der Voreinspritzmenge, die auf Alterungseffekten und/oder Exemplarstreuungen von Motor und/oder Einspritzsystem beruhen, während des Motorbetriebs korrigiert werden. Ferner kann diese Adaption für alle Betriebspunkte, das heißt für verschiedene Raildrücke, Drehzahlen und Lasten, durchgeführt werden.

Vorzugsweise wird die Voreinspritzmenge über den Druckgradienten auf einen Wert eingeregelt. Der Sollwert für den Druckgradienten dieser Regelung ist so gewählt, dass die Voreinspritzmenge so groß ist, wie es erforderlich ist, um die Geräuschemissionen zu begrenzen. Anderseits ist der Sollwert des Druckgradienten dieser Regelung so gewählt, dass die Voreinspritzmenge so klein ist, dass möglichst geringe Abgasemissionen auftreten.

Alternativ zum Druckgradienten können auch andere Größen, die den Verlauf der Voreinspritzung charakterisieren verwende werden. Insbesondere können Körperschallsensoren, die die Verbrennungsgeräusche unmittelbar erfassen können, und/oder Ionenstromsensoren eingesetzt werden.

Als Istwert GP wird bei der Verwendung eines Körperschallsensors und/oder eines Ionenstromsensors vorzugsweise ein Signal verwendet werden, das in einem bestimmten Winkelbereich der Kurbelwelle auftritt.

Vorzugsweise werden dabei nur bestimmte Frequenzbereiche des Signals ausgewertet. Insbesondere wird die Körperschallleistung über einen bestimmten Winkelbereich und/oder Frequenzbereich ausgewertet. Bei einem Ionenstromsensor wird vorzugsweise der Signalgradient, das heißt die Änderung des Signals über die Winkelstellung der Kurbelwelle, verwendet. Vorzugsweise wird diese Größe über mehrere Zumessungen gemittelt.

Dadurch kann der bestehende Zielkonflikt bei der Applikation der Voreinspritzmenge zwischen steigender Geräuschemission, die bei zu kleiner Voreinspritzmenge auftritt, und steigenden Emissionen, vor allem Partikel, die bei zu großer Voreinspritzmenge auftreten, entschärft werden. Damit kann bei unverändertem Geräuschniveau eines Fahrzeuges sowohl ein Beitrag zur Einengung der Streuungen der Emissionen im neuen und gealterten Zustand als auch zur gesamthaften Reduktion der Emissionen geleistet werden. Eine solche Funktion stellt somit eine Optimierung der Voreinspritzung dar.

Für eine solche Funktion ist die Verwendung des Brennraumdruckgradienten im Vergleich zu anderen Größen, wie dem ebenfalls aus dem Zylinderdruckverlauf und den Ansteuerzeitpunkten der Einspritzeinrichtung zu gewinnenden Merkmal "Zündverzug", vorteilhaft, da der Druckgradient ein direktes Maß für die Zielgröße Motorgeräusch ist. Der Zündverzug, wie auch der Druckgradient, wird durch eine Vielzahl von Betriebsparametern wie Kraftstoffsorte, Kompressionsendtemperatur und Abgasrückführrate bestimmt, so dass für den Zündverzug die Vorgabe eines Optimums mit dem Ziel der Geräuschminimierung ungleich schwerer ist.

Besonders vorteilhaft ist es, wenn die beschriebene Vorgehensweise für jeden Zylinder durchgeführt wird. Dies bedeutet, die Regelung passt jede einzelne Verbrennung eines jeden Zylinders im laufenden Betrieb den Sollvorgaben an.

Besonders vorteilhaft ist es, wenn bei unzulässigen Abweichungen, insbesondere wenn bestimmte Grenzwerte überschritten werden, Maßnahmen zum Schutz der Brennkraftmaschine eingeleitet werden. Die Grenzwerte sind derart vorgeben, dass z.B. die Funktion oder Lebensdauer der Brennkraftmaschine nicht gefährdet werden.

Bei der bisher beschriebenen Ausführungsform wurde die erste Ableitung des Brennraumdrucks als Eingangsgröße verwendet. Insbesondere werden das absolute Maximum des Zylinderdruckgradienten, dessen Winkellage, die weiteren relativen Maxima und deren Winkellagen ausgewertet.

Alternativ oder ergänzend werden einzelne oder mehrere Größen, die ausgehend von dem gemessenen Druckverlauf bestimmt werden, als Verbrennungsgeräusch proportionale Merkmale herangezogen.

Wesentliche Größen sind die Maximalwerte und/oder die Winkellage höherer Ableitungen, insbesondere die 2. Ableitung, des Zylinderdruckverlaufes nach dem Kurbelwinkel und/oder nach der Zeit.

Ferner sind die aus dem Druckverlauf zu berechnenden thermodynamischen Merkmalsgrößen, wie beispielsweise der Heizverlauf, der Brennverlauf, der Summenheizverlauf und/oder der Summenbrennverlauf besonders geeignet.

Der Heizverlauf bezeichnet die durch die Verbrennung an das Arbeitsgas übergehende Wärme pro Kurbelwinkel. Die Einheit des Heizverlaufes ist üblicherweise [J/°KW] oder entsprechende Umrechnungen. Der Brennverlauf stellt eine analoge Größe dar. Im Unterschied zum Heizverlauf beinhaltet der Brennverlauf jedoch die gesamte, während der Verbrennung freigesetzte Wärme. Damit ist der Brennverlauf im wesentlichen um die über die Brennraumwände abfließende Wärme pro Winkeleinheit größer als der Heizverlauf.

Unter Anwendung des ersten Hauptsatzes der Thermodynamik werden der Heizverlauf und/oder der Brennverlauf bei Kenntnis kalorischer Daten von Brenngas und Kraftstoff sowie Daten der Motorgeometrie unter Zuhilfenahme bestimmter Modellannahmen aus dem Zylinderdruckverlauf berechnet.

Entsprechend den oben genannten Definitionen zum Heizverlauf, stellt der Summenheizverlauf das Integral des Heizverlaufes über dem Kurbelwinkel dar. Der Summenbrennverlauf entspricht dem Integral des Brennverlaufes über dem Kurbelwinkel.

Weitere Größen sind die Maximalwerte und/oder deren Winkellagen unterschiedlicher Ableitungen, insbesondere die erste Ableitung und die zweite Ableitung der oben genannten Größen, wie beispielsweise Heizverlauf, Brennverlauf, Summenheizverlauf oder Summenbrennverlauf, nach dem Kurbelwinkel oder nach der Zeit.

Ferner werden weitere Größen aus einem Brennverlaufsmodell errechnet. Dies sind insbesondere Größen, die den Einspritzmassenverlauf charakterisieren, wie z.B. die bis zum Brennbeginn eingespritzte Kraftstoffmasse oder Maximalwert des Einspritzverlaufes. Der Betrag des Minimums des Heizverlaufes stellt ein einfaches Maß für die bis zum Einsetzen der Verbrennung eingespritzte Kraftstoffmasse dar.

Der Brennverlauf wird mittels eines Modells, das die thermodynamische Betrachtung des Brennraumes einschließt, bestimmt. Die wesentlichste Messgröße ist der Zylinderdruck. Wird z.B. die Einbringung des Kraftstoffes in den Brennraum, die dem Massenzufluss zum Brennraum entspricht, und die nachfolgende Verdampfung, die dem Wärmeabfluss aus dem Arbeitsgas entspricht, nicht modelliert, dann zeigt der aus dem Zylinderdruckverlauf berechnete Brennverlauf ein charakteristisches Minimum zu Beginn der Einspritzung.

In einer einfachen Ausführungsform wird der Energiebetrag dieses Minimums in eine proportionale Einspritzmasse ΔmB umgerechnet werden. |QBmin| = ΔmB * r, wobei r der spezifischen Verdampfungswärme des Kraftstoffes entspricht.

Umfasst das Modell zur Berechnung des Brennverlaufes auch ein Teilmodell für die Einbringung und Verdampfung des Kraftstoffes, so werden als Messgrößen Daten benötigt, die eine Rekonstruktion des Einspritzverlaufes ermöglichen. Bei einem Common-Rail-System sind hierbei wenigstens der Raildruck und die Ansteuerdauer, ergänzt durch Geometrieparameter des Einspritzsystems, zu berücksichtigen. Für ganz oder teilweise nockengesteuerte Einspritzsysteme ist anstelle des Raildruckes die Drehzahl zu berücksichtigen. In beiden Fällen ist die Berücksichtigung der Messgröße Kraftstofftemperatur vorteilhaft.

## Patentansprüche

1. Verfahren zur Steuerung einer Brennkraftmaschine, wobei mit wenigstens einem Sensor eine erste Größe erfasst wird, die den Druck im Brennraum wenigstens eines Zylinders charakterisiert, **dadurch gekennzeichnet, dass** ausgehend von dieser ersten Größe eine zweite Größe ermittelt wird, wobei die zweite Größe die Änderung der ersten Größe und/oder den Verlauf der Verbrennung charakterisiert, wobei die Steuerung und/oder die Regelung von Betriebskenngrößen der Brennkraftmaschine abhängig von dieser zweiten Größe erfolgt.

2. Verfahren nach Anspruch 1, **dadurch gekennzeichnet, dass** die zweite Größe ausgehend von der Ableitung der ersten Größe vorgebbar ist.

3. Verfahren nach Anspruch 1, **dadurch gekennzeichnet, dass** abhängig von dem Vergleich der zweiten Größe mit einem Schwellenwert eine Stellgröße vorgebbar ist.

4. Verfahren nach Anspruch 1, **dadurch gekennzeichnet, dass** abhängig von dem Vergleich der zweiten Größe mit einem Sollwert eine Stellgröße vorgebbar ist.

5. Verfahren nach einem der vorherigen Ansprüche 1 bis 4, **dadurch gekennzeichnet, dass** abhängig von der zweiten Größe die Dauer und/oder der Beginn wenigstens einer Teileinspritzung gesteuert und/oder geregelt wird.

6. Verfahren nach einem der vorherigen Ansprüche 1 bis 4, **dadurch gekennzeichnet, dass** abhängig von der zweiten Größe ein Ladedruck gesteuert und/oder geregelt wird.

7. Verfahren nach einem der vorherigen Ansprüche 1 bis 4, **dadurch gekennzeichnet, dass** abhängig von der zweiten Größe ein Raildruck gesteuert und/oder geregelt wird.

8. Verfahren nach einem der vorherigen Ansprüche 1 bis 4, **dadurch gekennzeichnet, dass** abhängig von der zweiten Größe eine Luftgröße, die die der Brennkraftmaschine zugeführte Luftmenge charakterisiert, gesteuert und/oder geregelt wird.

9. Verfahren nach einem der vorherigen Ansprüche 1 bis 4, **dadurch gekennzeichnet, dass** abhängig von der zweiten Größe eine Dauer und/oder ein Beginn wenigstens einer Voreinspritzung, wenigstens einer Haupteinspritzung und/oder wenigstens einer Nacheinspritzung gesteuert und/oder geregelt wird.

10. Verfahren nach einem der vorherigen Ansprüche, **dadurch gekennzeichnet, dass** die zweite Größe den Maximalwert der ersten Größe und/oder den Maximalwert der Änderung der ersten Größe und/oder die Lage der Maximalwerte der ersten Größe charakterisiert.

11. Verfahren nach einem der vorherigen Ansprüche, **dadurch gekennzeichnet, dass** als zweite Größe ein Heizverlauf, ein Brennverlauf, ein Summenheizverlauf und/oder ein Summenbrennverlauf ausgehend von wenigstens der ersten Größe ermittelt wird.

12. Verfahren nach Anspruch 11, **dadurch gekennzeichnet, dass** die zweite Größe einen Maximalwert und/oder einen Maximalwert der Änderung und/oder eine Lage der Maximalwerte des Heizverlaufs, des Brennverlaufs, des Summenheizverlaufs und/oder des Summenbrennverlaufs charakterisiert.

13. Verfahren zur Steuerung einer Brennkraftmaschine, wobei eine Größe ermittelt wird, den Verlauf der Verbrennung charakterisiert, **dadurch gekennzeichnet, dass** die Größe mit einem Sollwert verglichen wird, und ausgehend von dem Vergleich mit dem Sollwert die Dauer und/oder der Beginn wenigstens einer Voreinspritzung vorgebbar ist.

14. Verfahren nach Anspruch 13, **dadurch gekennzeichnet, dass** als Größe, die den Verlauf der Verbrennung charakterisiert, die zweite Größe und/oder ein Signal eines Körperschallsensors und/oder eines Ionenstromsensors oder eine aus diesen Signalen abgeleitete Größe verwendet wird.

15. Vorrichtung zur Steuerung einer Brennkraftmaschine, wobei mit wenigstens einem Sensor eine erste Größe erfasst wird, die den Druck im Brennraum wenigstens eines Zylinders charakterisiert, **dadurch gekennzeichnet, dass** Mittel vorgesehen sind, die ausgehend von der ersten Größe eine zweite Größe ermitteln, wobei die zweite Größe die Änderung der ersten Größe und/oder den Verlauf der Verbrennung charakterisiert, und die die Betriebskenngrößen der Brennkraftmaschine abhängig von dieser zweiten Größe steuern und/oder die regeln.
